# EUROPÄISCHE PATENTSCHRIFT

(11) **EP 0 755 713 B1**
(45) Veröffentlichungstag und Bekanntmachung des Hinweises auf die Patenterteilung: **07.11.2001**
(21) Anmeldenummer: 96106749.3
(22) Anmeldetag: 29.04.1996
(51) Int. Cl.: B01D 46/24

(54) **Vorrichtung zum Reinigen von staubbeladenem Gas**
Device for cleaning dust-laden gas
Dispositif pour la purification de gaz chargé de poussière

(30) Priorität: 26.07.1995 DE 19527237
(43) Veröffentlichungstag der Anmeldung: 29.01.1997
(73) Patentinhaber: Lurgi Energie und Entsorgung GmbH, 40880 Ratingen (DE)
(72) Erfinder: Dehn, Günther, 46485 Wesel (DE); Wegelin, Rüdiger, 44265 Dortmund (DE); Möllenhoff, Horst, Dr., 45470 Mülheim (DE); Krein, Joachim, 54298 Aach (DE)
(74) Vertreter: Radünz, Ingo, Dipl.-Ing.

(56) Entgegenhaltungen:
- EP-A- 0 129 053
- EP-A- 0 402 032
- EP-A- 0 482 396
- US-A- 5 256 175

## Beschreibung

Die Erfindung betrifft eine Vorrichtung zum Reinigen von staubbeladenem, vorzugsweise heißem Gas mit Hilfe von keramischen, einseitig geschlossenen Filterkerzen gemäß dem Oberbegriff des Anspruches 1.

Aus der EP-A 0 433 637 ist ein Heißgasfilter mit keramischen Filterkerzen bekannt, die auf Sammelkanälen aufstehen oder an diesen aufgehängt sind. Diese Sammelkanäle sind parallel und mit seitlichem Abstand voneinander in mehreren Etagen übereinander innerhalb des Filterbehälters angeordnet. Die Sammelkanäle münden in eine Reingassammelkammer ein, die in dem Filterbehälter gebildet und an die ein Auslaßstutzen angeschlossen ist. Die Filterkerzen werden in zeitlichen Abständen mit Hilfe von Impulsgas abgereinigt. Der dabei von den Filterkerzen abgelöste Staub kann sich mit dem Rohgas auf dessen Weg zu den Filterkerzen in den unteren Etagen vermischen und wird sich an diesen Filterkerzen erneut anlagern. Diese Wiederanlagerung des Staubes und die dadurch notwendige doppelte oder dreifache Abreinigung des gleichen Staubes erhöht den Verbrauch an Impulsgas, welches sauber, unter Umständen besonders aufbereitet, auf jeden Fall aber auf hohen Druck gebracht werden muß, beträchtlich.

Bei dem aus der EP-A 0 129 053 bekannten Heißgasfilter sind die Filterkerzen an mehreren übereinander angeordneten Lochplatten aufgehängt, an die sich jeweils eine konische Haube zum Abführen des Reingases anschließt. Zwar soll der von den Filterkerzen abgelöste Staub an der Schräge der darunter liegenden Haube entlang gleiten. Trotzdem wird der abgelöste Staub auch bei dieser Anordnung z. B. durch Verwirbelung unterhalb der Lochplatten von dem Rohgas mitgenommen und kann sich an den Filterkerzen der unteren Etagen erneut anlagern.

Alle Lochböden des aus der EP-A 0 129 053 bekannten Heißgasfilters sind mit einem zentralen Führungsrohr zur Abführung des Reingases verbunden, das an dem Filterbehälter abgestützt ist. Da das Führungsrohr nicht beliebig hoch belastet werden kann, ist die Anzahl der in einem Filterbehälter unterzubringenden Lochböden und Filterkerzen begrenzt.

Der Erfindung liegt die Aufgabe zugrunde, die gattungsgemäße Vorrichtung so zu gestalten, daß die Filterkerzen gruppenweise abgereinigt werden können und daß der Verbrauch an Impulsgas zur Abreinigung gesenkt werden kann.

Aus der US-A-5 256 175 ist eine gattungsgemäße Vorrichtung zum Reinigen von staubbeladenem, heißen Gas bekannt, bei der mehrere Filtermodule übereinander angeordnet sind. Jedes Filtermodul enthält Filterkerzen, die an einer Lochplatte aufgehängt sind, oberhalb der sich eine Haube befindet. Jedes Filtermodul ist Filtersegmente aufgeteilt, von denen jedes aus einer kreissektorartigen, die Filterkerzen tragenden Lochplatte mit einer darüber befindlichen Haube zum Sammeln des gereinigten Gases besteht. Diese Vorrichtung hat den Nachteil, daß zum Auswechseln der hängenden Filterkerzen das gesamte Filtersegment ausgebaut werden muß. Das zum Abreinigen.der Filterkerzen in die Haube eingeblasene Reinigungsgas verteilt sich ohne Zwangsführung ungleichmäßig innerhalb der Haube. Alle Filterkerzen eines Filtersegmentes sind nur dann vollständig abzureinigen, wenn ein überhöhter Druck angewendet wird, was zu einem erhöhten Verbrauch an Reinigungsgas führt.

Diese Aufgabe wird bei einer gattungsgemäßen Vorrichtung erfindungsgemäß durch die kennzeichnenden Merkmale des Anspruches 1 gelöst. Vorteilhafte Ausgestaltungen der Erfindung sind Gegenstand der Unteransprüche.

Durch die Einteilung der Filtervorrichtung in voneinander unabhängige Filtermodule und die Einteilung der Filtermodule in gasseitig voneinander getrennte Filtersegmente ergibt sich die Möglichkeit, die Reihenfolge der Abreinigung so festzulegen, daß übereinander angeordnete Filterkerzen nicht gleichzeitig abgereinigt werden. Durch die in bezug auf den Reingassammelkanal symmetrische Anordnung der Tragsammler wird der impulsartig rückwärtsströmende Abreinigungsgasstrom nach beiden Seiten umgelenkt, so daß aufwendige Umlenkeinrichtungen eingespart werden können.

Durch den von oben kommenden mittigen Rohgasstrom und durch das sofortige auf jeder Höhe eines Filtermoduls herausgeführte Reingas stellen sich symmetrische Strömungsverhältnisse des Rohgasstromes ein. Dies führt zu einer vergleichmäßigten Beaufschlagung aller Filterkerzen mit Staub und somit zu einer Einsparung an für die Abreinigung notwendigem Pulsgas.

Durch die Einteilung der Filtervorrichtung in voneinander unabhängige Filtermodule und deren Einteilung in Filtersegmente wird es gemäß Anspruch 10 möglich, jedes Filtersegment einzeln an der Wand des Filterbehälters einzeln abzustützen. Dadurch läßt sich die Filtervorrichtung aus Gewichtsgründen mit einer großen Anzahl von übereinander angeordneten Filtermodulen ausstatten. So sind bis zu sechs und mehr übereinander angeordnete Filtermodule denkbar, wodurch der Filterbehälter bei vergleichbar unterzubringender Filterfläche schlank gefertigt werden. Der im Zentrum von Tragsammlern und Filterkerzen frei bleibende Raum dient zum Auffangen von Wärmedehnungen der Filtersegmente. Zusätzlich kann der freie Raum als Montageöffnung verwendet werden.

Mehrere Ausführungsbeispiele der Erfindung sind in der Zeichnung dargestellt und werden im folgenden näher erläutert.
Es zeigen:
- Fig. 1: den Längsschnitt durch eine Vorrichtung zum Reinigen von Gas,
- Fig. 2: den Schnitt II-II nach Fig. 1,
- Fig. 3: die Einzelheit Z nach Fig. 1,
- Fig. 4: den Schnitt IV-IV nach Fig. 3
- Fig. 5: den Längsschnitt durch eine andere Vorrichtung zum Reinigen von Gas
- Fig. 6 bis 8: jeweils den Schnitt II-II nach Fig. 1 gemäß einer weiteren Ausführungsform,
- Fig. 9: den Längsschnitt durch eine andere Vorrichtung zum Reinigen von Gas und
- Fig. 10: den Längsschnitt durch eine andere Vorrichtung zum Reinigen von Gas.

Ein vorzugsweise zylindrischer, gegebenenfalls auf Druck ausgelegter und durch einen Deckel 27 verschlossener Filterbehälter 10 weist im Deckel 27 einen mittig angeordneten Einlaßstutzen 1 für das zu reinigenden Rohgas auf. Der untere Teil des Filterbehälters 10 ist als Trichter 16 ausgebildet, der mit einem Auslaßstutzen 17 für die Abführung des abgetrennten Staubes versehen ist. Unterhalb des Einlaßstutzen 1 ist eine Verteilvorrichtung 2, die mit schräg nach unten gerichteten Ablenkflächen versehen ist. Diese Verteilvorrichtung 2 lenkt den durch den Einlaßstutzen 1 mittig eintretenden Strom des Rohgases schräg nach unten und quer und von innen nach außen zu Filterkerzen 6.

Die Filterkerzen 6 sind keramische, einseitig offene Hohlkörper, die mit ihrem offenen Ende auf geraden Tragsammlern 7 aufstehen. Die Tragsammler 7 sind parallel und mit Abstand voneinander angeordnet und münden in einen Reingassammelkanal 8 ein. Der Reingassammelkanal 8 liegt in der gleichen Ebene mit den Tragsammlern 7. Die Filterkerzen 6 können auch mit einem das offene Ende umschließenden Bund versehen und über diesen Bund an den Tragsammlern 7 aufgehängt sein.

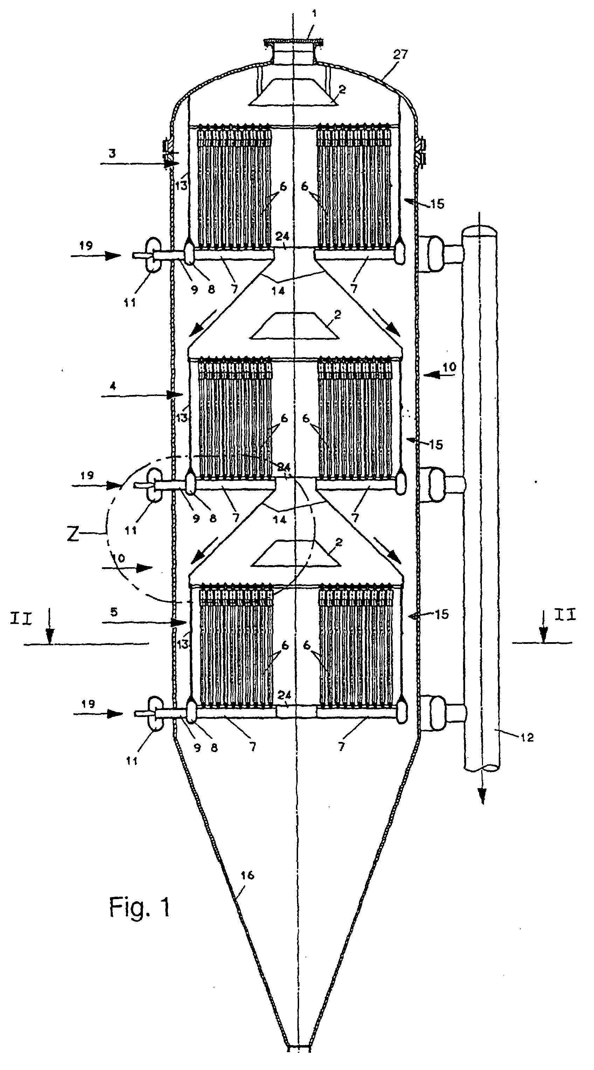

Die Reingassammelkanäle 8 mit den dazugehörenden Tragsammlern 7 und den angeschlossenen Filterkerzen 6 bildet ein Filtermodul. In dem Filterbehälter 10 sind mehrere solcher Filtermodule übereinander angeordnet werden. In der Fig. 1 sind drei solcher Filtermodule gezeigt, nämlich ein oberes Filtermodul 3, ein mittleres Filtermodul 4 und ein unteres Filtermodul 5, die jeweils eine Etage des Gesamtfilters bilden.

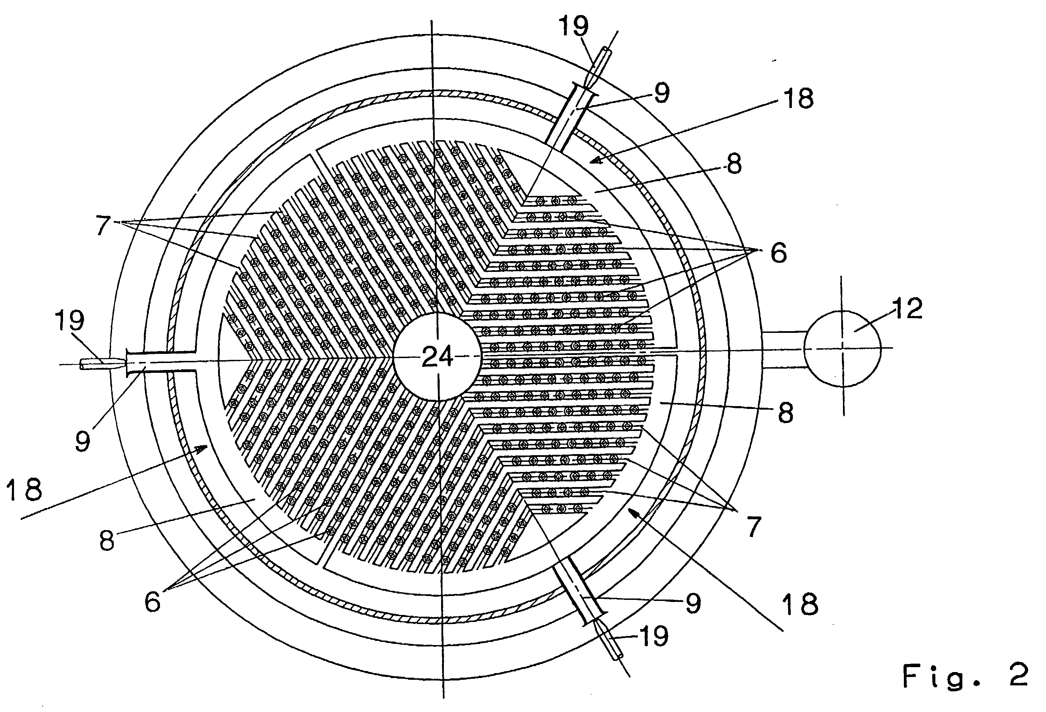

Jedes Filtermodul 3, 4, 5 ist in mehrere kreissektorartige Filtersegmente 18 aufgeteilt, die gasseitig voneinander getrennt sind. In der Mitte eines jeden Filtermoduls 3, 4, 5 verbleibt ein Raum, der von Tragsammlern 7 freigehalten ist und eine mittige Öffnung 24 bildet. Es können bis zu sechs oder mehr solcher Filtersegmente 18 vorgesehen werden, die jeweils gleich groß sind. Gemäß der Fig. 2 ist das Filtermodul 5 in drei Filtersegmente 18 aufgeteilt.

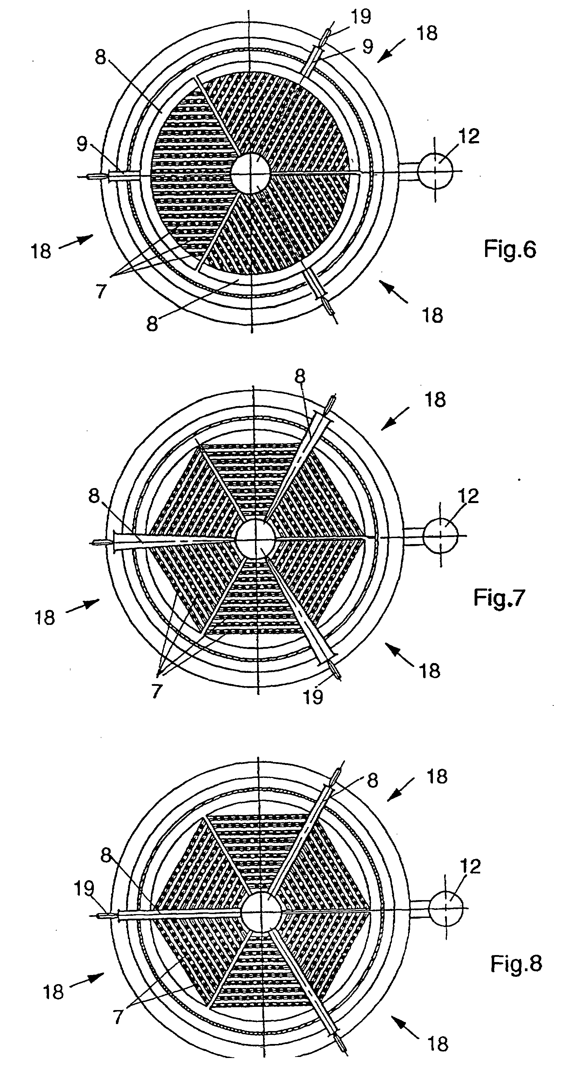

Die Tragsammler 7 eines jeden Filtersegments 18 sind mit einem separaten Reingassammelkanal 8 verbunden. Die Tragsammler 7 sind symmetrisch zu einer durch den Mittelpunkt des Filtersegments 18 verlaufende Linie angeordnet. Gemäß den Fig. 2 und 6 umgeben die Reingassammelkanäle 8 die Tragsammler 7 von außen und sind kreisringförmig ausgebildet. Dabei können die Tragsammler 7 V-förmig oder parallel zu der Symmetrieachse angeordnet sein. Die kreisringförmigen Reingassammelkanäle 8 sind mit einer mittig angeordneten Reingasaustrittsleitung 9 verbunden, die in der Symmetrieachse angeordnet sind. Diese Reingasaustrittsleitung 9 ist durch die Wand des Filterbehälters 10 nach außen geführt.

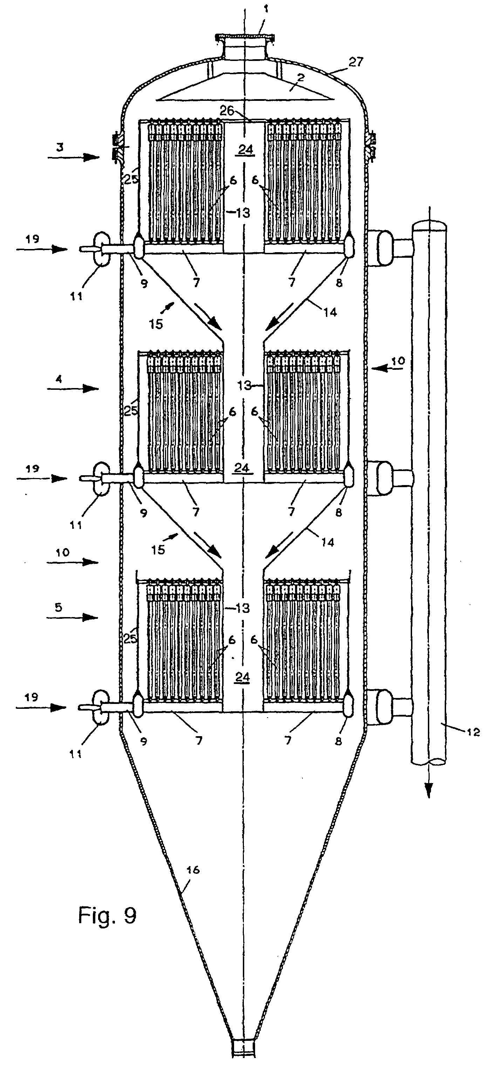

Gemäß den Fig. 6 und 7 sind die Reingassammelkanäle 8 entlang der Symmetrieachse des Filtersegments 18 angeordnet, wobei die Tragsammler 7 von beiden Seiten in den Reingassammelkanal 8 einmünden. Jeder dieser Reingassammelkanäle 8 ist nach außen durch die Wand des Filterbehälters 10 geführt. Der Strömungsquerschnitt der Reingassammelkanäle 8 vergrößert sich in Strömungsrichtung des Reingases in dem Maße, wie der Volumenstrom zunimmt. Die Vergrößerung des Strömungsquerschnittes kann in der Breite und/oder in der Höhe des Reingassammelkanals 8 vorgenommen werden.

Die nach außen geführten Reingasaustrittsleitungen 9 (Fig. 1, 2, 3, 6) oder Reingassammelkanäle 8 (Fig. 7, 8) münden in einen in der gleichen Ebene außerhalb des Filterbehälters 10 verlegten Reingasringsammler 11. Die Reingasringsammmler 11 sind an eine gemeinsame Reingasleitung 12 angeschlossen.

In die nach außen durch die Wand der Filterbehälters 10 ragenden Enden jeder Reingasaustrittsleitung 9 oder jedes Reingassammelkanals 8 ist eine Abreinigungslanze 19 gerichtet, über die zur Abreinigung der Filterkerzen 6 ein Impulsgas eingeblasen wird. Die Abreinigung erfolgt für jeden Filtersegment 18 einzeln.

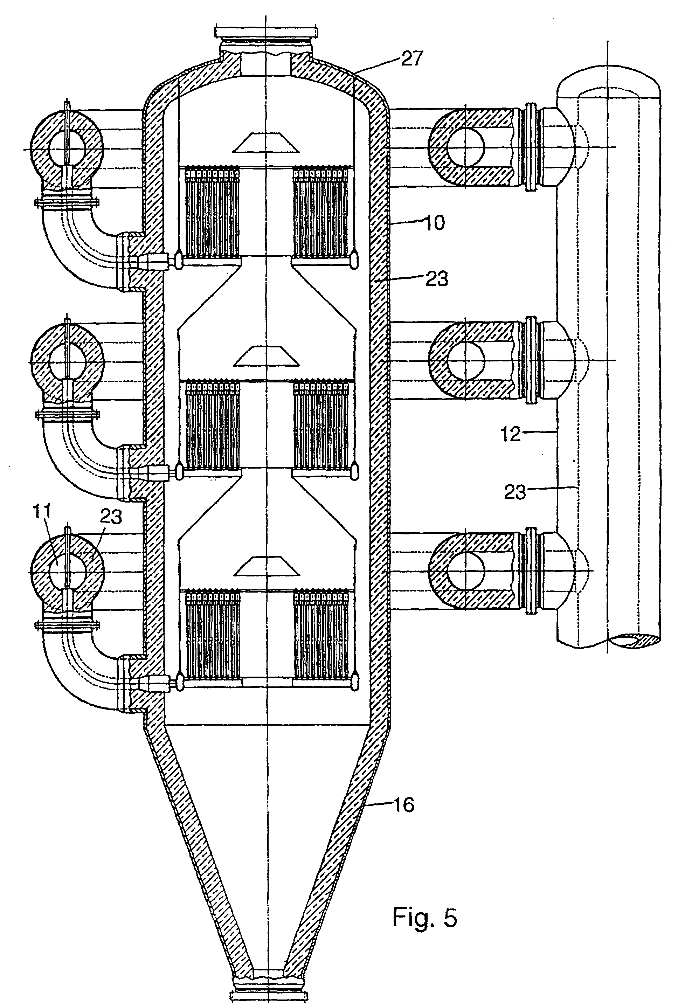

Wie in Fig. 5 gezeigt ist, können die Wand, der Deckel 27 und der Trichter 16 des Filterbehälters 10 sowie die Reingasringsammmler 11 und die Reingasleitung 12 auf der Innenseite mit einer feuerfesten Auskleidung 23 versehen sein.

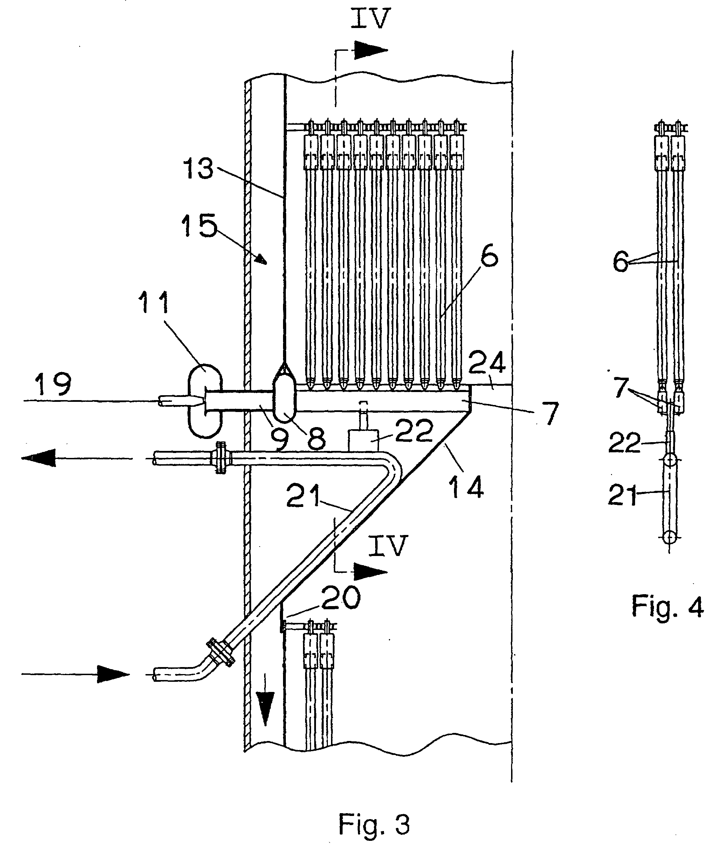

Jedes Filtersegment 18 eines Filtermoduls 3, 4, 5 ist einzeln an der Wand des Filterbehälters 10 über eine oder mehrere Stützkonstruktionen abgestützt. Die Stützkonstruktion ist als Wandkonsole ausgebildet, die gemäß Fig. 3 aus einem oder mehreren gewinkelten Rohrelementen 21 besteht. Die Rohrelemente 21 sind insbesondere bei der Verwendung als Heißgasfilter von einem Kühlmedium durchströmt. Die Stützkonstruktion kann auch mit einem Doppelmantel für das durchströmende Kühlmedium versehen werden.

Auf den als Stützkonstruktion dienenden Rohrelementen 21 ist ein Auflager 22 angeordnet, das aus einem senkrechten Steg besteht, der zwei seitliche Stege trägt. Auf den Stegen dieses Auflagers 22 liegen die Tragsammler 7 zweier benachbarten Filtersegmente 18 gleitend auf. Der Festpunkt für ein Filtersegment 18 wird auf den Durchtritt durch den Filterbehälter der jeweilige Reingasaustrittsleitung 9 oder des jeweiligen Reingassammelkanals 8 gelegt. Das einzelne Filtersegment 18 kann dadurch bei einem Temperaturanstieg auf den Auflagern 22 gleitend zur Behältermitte hin wachsen, ohne daß ein besonderer Kompensator, der bei hohen Temperaturen und hohen Differenzdrücken Probleme bereiten kann, notwendig wäre. Bei Betrieb des Filters mit heißen Gasen bis zu 1000 °c beeinflußt daher die Materialausdehnung durch eine Temperaturerhöhung nur das einzelne Filtersegment 18. Bei dieser Anordnung von mechanisch voneinander getrennten Filtersegmenten 18 wirkt jeweils nur das Gewicht eines einzigen Filtersegments 18 auf die Stützkonstruktion. Die Filtervorrichtung läßt sich daher mit einer großen Anzahl von übereinander angeordneten Filtermodulen ausstatten. Der Filterbehälter 10 kann auch bei einer großen unterzubringenden Filterfläche schlank gefertigt werden. In der Fig. 10 ist eine Filtervorrichtung mit vier übereinander angeordneten Filtermodulen gezeigt, die nach dem oben beschriebenen Prinzip aufgebaut sind

Jedes Filtermodul 4, 5 ist von dem darüber angeordneten Filtermodul 3, 4 von einem aus Blech bestehenden Ascheablaufmantel 15 getrennt. Dieser Ascheablaufmantel 15 enthält einen zylindrischen Abschnitt 13 und einen konischen Abschnitt 14 und überbrückt den Innenraum des Filterbehälters 10 zwischen zwei übereinander liegenden Filtermodulen 3, 4, 5. Bei der Ausführungsform gemäß den Fig. 1 und 2 umschließt der zylindrischen Abschnitt 13 des Ascheablaufmantels 15 die Filterkerzen 6 des betreffenden Filtermoduls 3, 4, 5 von außen und reicht mindestens bis zur Oberkante der Filterkerzen 6. Die Unterkante des Ascheablaufmantels 15 ist dicht auf den Reingassammelkanal 8 aufgeschweißt. Sind die Tragsammler 7, wie in den Fig. 7 und 8 gezeigt, angeordnet, so erfolgt der Anschluß des zylindrischen Abschnittes 13 an den äußeren Tragsammlern 7. Der konische Abschnitt 14 verengt sich nach oben und geht in die von den Tragsammlern 7 freigehaltene Öffnung 24 des darüber liegenden Filtermoduls 4, 3 über. Er ist an der aus den Rohrelementen 21 gebildeten Stützkonstruktion befestigt. Die Nahtstelle 20 zwischen dem zylindrischen Abschnitt 13 und dem konischen Abschnitt 14 ist überlappend und schiebend als Schiebeverbindung ausgeführt. Bei dem das obere Filtermodul 3 umschließenden Ascheablaufmantel 15 fehlt der konische Abschnitt 14. Statt dessen ist der zylindrische Abschnitt 13 an der Oberkante mit dem Deckel 27 oder der Wand des Filterbehälters 10 verbunden und kann an der Verbindungsstelle mit einer Schiebeverbindung versehen sein.

Der sich an den Filterkerzen 6 anlagernde Staub wird in zeitlichen Abständen mit Hilfe von Pulsgas, das kurzzeitig durch die Abreinigungslanzen 19 eingeblasen wird, von der Kerzenoberfläche abgelöst. Der abgelöste Staub wird an dem Ascheablaufmantel 15 vorbei durch den Spalt zwischen dem Ascheablaufmantel 15 und der Wand des Filterbehälters 10 entlang geführt und gelangt in den Trichter 16. Dabei kommt der abgelöste Staub nicht mehr mit dem Rohgas in Kontakt, da dieses auf der Innenseite des Ascheablaufmantels 15 den Filterkerzen 6 des jeweils darunter angeordneten Filtermoduls 4, 5 zuströmt. Ein Vermischen von bereits abgelösten Staub mit dem Rohgas auf dessen Weg zu den Filterkerzen 6 und eine Wiederanlagerung des gleichen Staubes ist nicht mehr möglich: Auf diese Weise wird eine große Menge an Pulsgas eingespart, das für die Abreinigung der Filterkerzen 6 notwendig ist und für diesen Zweck sauber, unter Umständen besonders aufbereitet, auf jeden Fall aber auf hohen Druck gebracht werden muß.

Der zwischen der Wand des Filterbehälters 10 und dem Ascheablaufmantel 15 gebildete Ringspalt für den Staubablauf kann klein gewählt werden. Die Gefahr einer Brückenbildung wird reduziert. Der Ascheablaufmantel 15 braucht nur mit einer geringen Wanddicke versehen zu sein, da auf beiden Seiten des Ascheablaufmantels 15 der gleiche Druck herrscht.

Durch den von oben kommenden mittigen Rohgasstrom und durch das sofortige auf jeder Höhe eines Filtermoduls 3, 4, 5 herausgeführte Reingas stellen sich symmetrische Strömungsverhältnisse des Rohgasstromes ein. Dies führt zu einer vergleichmäßigten Beaufschlagung aller Filterkerzen 6 mit Staub und somit zu einer weiteren Einsparung an für die Abreinigung notwendigem Pulsgas.

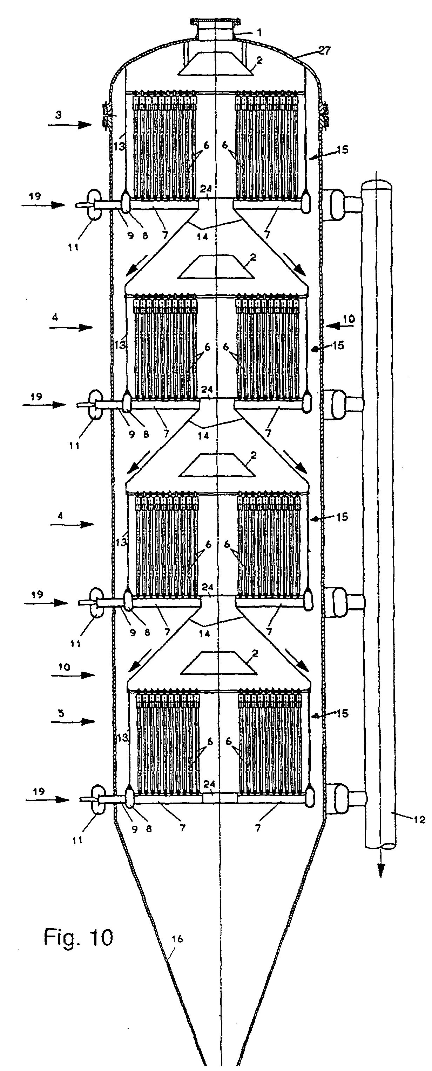

Eine Variante des Ascheablaufmantels 15 ist in der Fig. 9 gezeigt. Hierbei ist der zylindrische Abschnitt 13 des Ascheablaufmantels 15 in dem von den Tragsammlern 7 freigehaltenen, die Öffnung 24 bildenden Raum angeordnet. Der zylindrische Abschnitt 13 begrenzt die Filterkerzen 6 eines Filtermoduls 3, 4, 5 von innen und ist mit den Tragsammlern 7 verbunden. Der sich an den zylindrischen Abschnitt 13 anschließende konische Abschnitt 14 erweitert sich nach oben und ist nach Fig. 9 mit den kreisringförmigen Reingassammelkanäle 8 des darüber angeordneten Filtermoduls 4, 5 verbunden. Der mittige freie Raum des oberen Filtermoduls 3 ist durch eine Platte 26 verschlossen. Die Filterkerzen 6 jedes Filtermoduls 3, 4, 5 sind außen von einem Leitmantel 25 umgeben. Die Wirkungsweise dieses Ascheablaufmantels 15 entspricht derjenigen des zuvor beschriebenen Ascheablaufmantels 15. Das durch den Einlaßstutzen 1 eintretende, zu reinigende Rohgas trifft senkrecht von oben auf die Filterkerzen 6 des oberen Filtermoduls 3. Ein weiterer Teil des Rohgases strömt nach unten und zwischen dem Ascheablaufmantel 15 und der Wand des Filterbehälters 10 den darunter angeordneten Filtermodulen 4, 5 zu. Dort trifft das Rohgas, geführt durch den Leitmantel 25 und den zylindrischen Abschnitt 13 des Ascheablaufmantels 15, senkrecht von oben auf die Filterkerzen 6 des betreffenden Filtermoduls 4, 5. Der durch die Abreinigung von den Filterkerzen 6 abgelöste Staub wird auf der Innenseite an dem Ascheablaufmantel 15 entlang und an den Filterkerzen 6 des darunter liegenden Filtermoduls 4, 5 vorbei geführt, ohne mit dem Rohgas noch einmal in Kontakt zu kommen.

## Patentansprüche

1. Vorrichtung zum Reinigen von staubbeladenem, vorzugsweise heißem Gas mit Hilfe von keramischen, einseitig geschlossenen Filterkerzen (6), die innerhalb eines Filterbehälters (10) in mehreren Etagen übereinander angeordnet und an Tragsammler (7) angeschlossen sind, die mit den Filterkerzen (6) innerhalb jeweils einer Etage ein von den anderen Etagen unabhängiges Filtermodul (3, 4, 5) bilden, wobei jedes Filtermodul (3, 4, 5) kreissektorartig in mehrere gasseitig voneinander getrennte Filtersegmente (18) aufgeteilt ist, wobei jedes Filtersegment (18) mit einem separaten Reingassammelkanal (8) verbunden ist, in den jeweils direkt oder indirekt eine Abreinigungslanze (19) hineinragt und wobei im Zentrum jeder Etage ein von Tragsammlern (7) freier Raum verbleibt, mit einem oben mittig angeordneten Einlaßstutzen (1) für das Rohgas und Ascheablaufmänteln (15) zwischen der Filtermodulen (3, 4, 5), **dadurch gekennzeichnet, daß** die Tragsammler (7) jedes Filtersegments (18) parallel und mit seitlichem Abstand voneinander und symmetrisch zu einer durch den Mittelpunkt jedes Filter (18) verlaufenden Mittellinie angeordnet und in einer in bezug auf den dazugehörenden Reingassammelkanal (8) symmetrischen Anordnung in diesen münden, wobei der Reingassammelkanal (8) mit den Tragsammlern (7) in der gleichen Ebene liegt und in jeden Reingassammelkanal (8) jeweils direkt oder indirekt eine Abreinigungslanze (19) hineinragt, wobei die Abreinigung für jedes Filtersegment (18) einzeln erfolgen kann und die Filterkerzen (6) somit gruppenweise abreinigbar sind.

2. Vorrichtung nach Anspruch 1, **dadurch gekennzeichnet, daß** die Reingassammelkanäle (8) in der Mittellinie des Filtersegments (18) angeordnet sind und daß die Tragsammler (7) von beiden Seiten in den Reingassammelkanal (8) einmünden.

3. Vorrichtung nach Anspruch 2, **dadurch gekennzeichnet, daß** der Strömungsquerschnitt der Reingassammelkanäle (8) in Strömungsrichtung zunimmt.

4. Vorrichtung nach einem oder mehreren der Ansprüche 1 bis 3, **dadurch gekennzeichnet, daß** die Reingassammelkanäle (8) durch die Wand des Filterbehälters (10) nach außen geführt sind.

5. Vorrichtung nach'Anspruch 1, **dadurch gekennzeichnet, daß** der Reingassammelkanal (8) kreisringförmig ausgebildet ist und die Tragsammler (7) eines Filtersegments (18) von außen umgibt.

6. Vorrichtung nach Anspruch 5, **dadurch gekennzeichnet, daß** der kreisringförmige Reingassammelkanal (8) mit einer mittig angeordneten Reingasaustrittsleitung (9) versehen ist, die durch die Wand des Filterbehälters (10) nach außen geführt ist.

7. Vorrichtung nach einem oder mehreren der Ansprüche 1 bis 6, **dadurch gekennzeichnet, daß** die durch die Wand des Filterbehälters (10) nach außen ragenden Enden der Reingassammelkanäle (8) oder der Reingasaustrittsleitungen (9) eines Filtermoduls (3, 4, 5) in eine den Filterbehälter (10) außen in der Ebene des Filtermoduls (3, 4, 5) angebrachte Reingasringleitung (11) münden, die mit einer gemeinsamen Reingasleitung (12) verbunden sind.

8. Vorrichtung nach einem oder mehreren der Ansprüche 1 bis 7, **dadurch gekennzeichnet, daß** in die durch die Wand des Filterbehälters nach außen ragenden Enden der Reingassammelkanäle (8) oder der Reingasaustrittsleitungen (9) jeweils eine der Abreinigungslanzen (19) gerichtet ist.

9. Vorrichtung nach einem der Ansprüche 1 bis 8, **dadurch gekennzeichnet, daß** jedes Filtersegment (18) einzeln über eine Stützkonstruktion an der Wand des Filterbehälters (10) abgestützt ist, daß auf der Stützkonstruktion ein Auflager (22) angeordnet ist, auf dem der Filtersegment (18) gleitend aufliegt, daß jeder Reingassammelkanal (8) in dem Filterbehälter (10) als Festpunkt für das betreffende Filtersegment (18) gehalten ist.

10. Vorrichtung nach Anspruch 9, **dadurch gekennzeichnet, daß** die Stützkonstruktion aus Rohrelementen (21) gebildet ist.

11. Vorrichtung nach Anspruch 8 oder 9 **dadurch gekennzeichnet, daß** die Stützkonstruktion gekühlt ist.

12. Vorrichtung nach einem der Ansprüche 1 bis 11, **dadurch gekennzeichnet, daß** der Filterbehälter (10), die Reingasringsammler (11) und die Reingasleitung (12) auf der Innenseite mit einer feuerfesten Auskleidung (23) versehen sind.

## Claims

1. Device for cleaning dust-laden, preferably hot, gas with the aid of ceramic filter cartridges (6) which are closed at one end and which are arranged one above the other in several storeys within a filter container (10) and connected with support collectors (7), which together with the filter cartridges (6) within each storey form a filter module (3, 4, 5) independent of the other storeys, wherein each filter module (3, 4, 5) is divided in the manner of a circular sector into several filter segments (18) separated from one another at the gas side, wherein each filter segment (18) is connected with a separate clean gas collecting channel (8) into which a respective cleaning-down lance (19) projects directly or indirectly and wherein a space free of support collectors (7) remains in the centre of each storey, with an inlet connection (1) arranged centrally at the top for the raw gas and ash discharge jackets (15) between the filter modules (3, 4, 5), **characterised in that** the support collectors (7) of each filter segment (18) are arranged parallel to and at a lateral spacing from one another and symmetrically with respect to a centre line running through the centre point of each filter (18) and open into the associated clean gas collecting channel (8) in a symmetrical arrangement with respect to thereto, wherein the clean gas collecting channel (8) together with the support collectors (7) lie in the same plane and a cleaning-down lance (19) projects directly or indirectly into each clean gas collecting channel (8), wherein the cleaning down can take place individually for each filter segment (18) and the filter cartridges (6) can thus be cleaned down in groups.

2. Device according to claim 1, **characterised in that** the clean gas collecting channels (8) are arranged in the centre line of the filter segment (18) and that the support collectors (7) open into the clean gas collecting channel (8) from both sides.

3. Device according to claim 2, **characterised in that** the flow cross-section of the clean gas collecting channels (8) increases in flow direction.

4. Device according to one or more of claims 1 to 3, **characterised in that** the clean gas collecting channels (8) are led to the outside through the wall of the filter container (10).

5. Device according to claim 1, **characterised in that** the clean gas collecting channel (8) is constructed in circularly annular shape and externally surrounds the support collectors (7) of a filter segment (18).

6. Device according to claim 5, **characterised in that** the clean gas collecting channel (8) of circularly annular shape is provided with a centrally arranged clean gas outlet duct (9), which is led through the wall of the filter container (10) to the outside.

7. Device according to one or more of claims 1 to 6, **characterised in that** the ends, which project through the wall of the filter container (10) to the outside, of the clean gas collecting channels (8) or of the clean gas outlet ducts (9) of a filter module (3, 4, 5) open into a clean gas ring duct (11), which is mounted at the filter container (10) at the outside in the plane of the filter module (3, 4, 5) and which is connected with a common clean gas duct (12).

8. Device according to one or more of claims 1 to 7, **characterised in that** a respective one of the cleaning-down lances (19) is directed into each of the ends, which project through the wall of the filter container to the outside, of the clean gas collecting channels (8) or the clean gas outlet ducts (9).

9. Device according to one of claims 1 to 8, **characterised in that** each filter segment (18) is supported individually by way of a support construction at the wall of the filter container (10), that a seat (22), on which the filter segment (18) slidably rests, is arranged on the support construction, and that each clean gas collecting channel (8) is mounted in the filter container (10) as a fixed point for the respective filter segment (18).

10. Device according to claim 9, **characterised in that** the support construction is formed from tube elements (21).

11. Device according to claim 8 or 9, **characterised in that** the support construction is cooled.

12. Device according to one of claims 1 to 11, **characterised in that** the filter container (10), the clean gas ring collector (11) and the clean gas duct (12) are provided on the inner side with a fireproof lining (23).

## Revendications

1. Dispositif d'épuration de gaz chargé de poussières, de préférence chaud, à l'aide de bougies filtrantes (6) céramiques fermées d'un côté, superposées en plusieurs étages à l'intérieur d'un récipient de filtre (10) et raccordées à des collecteurs supports (7), qui forment avec les bougies filtrantes (6), à l'intérieur de chaque étage, un module filtrant (3, 4, 5) indépendant des autres étages, chaque module filtrant (3, 4, 5) étant partagé par secteurs de cercle en plusieurs segments filtrants (18) séparés les uns des autres côté gaz, chaque segment filtrant (18) étant relié à un conduit collecteur de gaz épuré (8) séparé, dans lequel pénètre, directement ou indirectement, une lance de nettoyage (19), un espace exempt de collecteurs supports (7) subsistant au centre de chaque étage, avec une tubulure d'admission (1) pour le gaz brut disposée en haut et au centre et des chemises d'évacuation des cendres (15) entre les modules filtrants (3, 4, 5), **caractérisé en ce que** les collecteurs supports (7) de chaque segment filtrant (18) sont disposés parallèlement et avec une distance latérale entre eux, et symétriquement par rapport à une ligne médiane passant par le centre de chaque filtre (18), et débouchent dans le conduit collecteur de gaz épuré (8) correspondant en un agencement symétrique par rapport à ce dernier, le conduit collecteur de gaz épuré (8) se situant dans le méme plan que les collecteurs supports (7) et une lance de nettoyage (19) pénétrant, directement ou indirectement, dans chaque conduit collecteur de gaz épuré (8), l'épuration pour chaque segment filtrant (18) pouvant être assurée individuellement et les bougies filtrantes (6) pouvant être ainsi nettoyées par groupes.

2. Dispositif suivant la revendication 1, **caractérisé en ce que** les conduits collecteurs de gaz épuré (8) sont disposés dans la ligne médiane du segment filtrant (18) et que les collecteurs supports (7) débouchent des deux côtés dans le conduit collecteur de gaz épuré (8).

3. Dispositif suivant la revendication 2, **caractérisé en ce que** la section transversale d'écoulement des conduits collecteurs de gaz épuré (8) augmente dans le sens d'écoulement.

4. Dispositif suivant l'une ou plusieurs des revendications 1 à 3, **caractérisé en ce que** les conduits collecteurs de gaz épuré (8) sont guidés vers l'extérieur au travers de la paroi du récipient de filtre (10).

5. Dispositif suivant la revendication 1, **caractérisé en ce que** le conduit collecteur de gaz épuré (8) est réalisé en forme d'anneau de cercle et entoure de l'extérieur les collecteurs supports (7) d'un segment filtrant (18).

6. Dispositif suivant la revendication 5, **caractérisé en ce que** le conduit collecteur de gaz épuré (8) en forme d'anneau de cercle est muni d'une conduite de sortie de gaz épuré (9) disposée au centre, guidée vers l'extérieur au travers de la paroi du récipient de filtre (10).

7. Dispositif suivant l'une ou plusieurs des revendications 1 à 6, **caractérisé en ce que** les extrémités des conduits collecteurs de gaz épuré (8) ou des conduites de sortie de gaz épuré (9) d'un module filtrant (3, 4, 5) dépassant vers l'extérieur au travers de la paroi du récipient de filtre (10) débouchent dans une conduite annulaire de gaz épuré (11) montée à l'extérieur du récipient de filtre (10) dans le plan du module filtrant (3, 4, 5), qui sont reliées à une conduite de gaz épuré (12) commune.

8. Dispositif suivant l'une ou plusieurs des revendications 1 à 7, **caractérisé en ce que** l'une des lances de nettoyage (19) est dirigée dans chacune des extrémités des conduits collecteurs de gaz épuré (8) ou des conduites de sortie de gaz épuré (9) dépassant vers l'extérieur au travers de la paroi du récipient de filtre.

9. Dispositif suivant l'une des revendications 1 à 8, **caractérisé en ce que** chaque segment filtrant (18) est supporté individuellement par l'intermédiaire une structure d'appui sur la paroi du récipient de filtre (10), qu'un coussinet (22), sur lequel repose de manière glissante le segment filtrant (18), est disposé sur la structure d'appui, que chaque conduit collecteur de gaz épuré (8) est maintenu dans le récipient de filtre (10) comme point fixe pour le segment filtrant concerné (18).

10. Dispositif suivant la revendication 9, **caractérisé en ce que** la structure d'appui est formée d'éléments tubulaires (21).

11. Dispositif suivant l'une des revendications 8 et 9, **caractérisé en ce que** la structure d'appui est refroidie.

12. Dispositif suivant l'une des revendications 1 à 11, **caractérisé en ce que** le récipient de filtre (10), les collecteurs annulaires de gaz épuré (11) et la conduite de gaz épuré (12) sont munis sur leur côté interne d'un revêtement réfractaire (23).
